## Europäisches Patentamt

## European Patent Office

## Office européen des brevets

(19)

(11) Veröffentlichungsnummer: **0 168 529**
A2

(12) # EUROPÄISCHE PATENTANMELDUNG

(21) Anmeldenummer: **84115681.3**

(22) Anmeldetag: **18.12.84**

(51) Int. Cl.⁴: **G 02 B 27/60**, G 02 B 27/64

(30) Priorität: **12.05.84 DE 3417691**

(43) Veröffentlichungstag der Anmeldung: **22.01.86**
**Patentblatt 86/4**

(84) Benannte Vertragsstaaten: **AT BE CH DE FR GB IT LI NL SE**

(71) Anmelder: **DR.-ING. RUDOLF HELL GmbH, Grenzstrasse 1-5, D-2300 Kiel 14 (DE)**

(72) Erfinder: **Penza, Hans, Matthias-Claudius-Strasse 30, D-2308 Preetz (DE)**
Erfinder: **Knoll, Hartmut, Rinkenberg 18, D-2314 Schönkirchen (DE)**

(54) **Vorrichtung zur Aufspannung von Abtast- u. Aufzeichnungsvorlagen in der Reproduktionstechnik.**

(57) Aufspannvorrichtung für blattförmige Abtastvorlagen oder blattförmiges Aufzeichnungsmaterial mit einem eine durchsichtige Platte tragenden Unterteil, wobei zwischen Unterteil und Platte eine flexible Auflage für die Vorlagen vorgesehen ist. Durch die Auflage werden die Vorlagen mittels eines Luftkissens gegen die Platte gedrückt, indem zwischen Auflage und Platte ein Unterdruck erzeugt und die flexible Auflage in ihrem zentralen Bereich durch einen Überdruck die Platte entgegen ihrer Durchbiegung anhebt.

Vorrichtung zur Aufspannung von Abtast- und Aufzeichnungsvorlagen in der Reproduktionstechnik

Die Erfindung betrifft eine Vorrichtung zum Aufspannen von Abtast- und Aufzeichnungsvorlagen in der Reproduktionstechnik gemäß dem Oberbegriff des Anspruchs 1. In der Reproduktionstechnik werden zum Zwecke der Reproduktion häufig Vorlagen auf einem Vorlagentisch aufgespannt, um optoelektronisch abgetastet zu werden, oder es wird lichtempfindliches Aufzeichnungsmaterial auf einem solchen Tisch aufgespannt, um mittels eines Lichtstrahls belichtet zu werden. Hierbei sollen Vorlagen bzw. Aufzeichnungsmaterial im Schärfebereich der Abtastoptik bzw. des belichteten Lichtstrahls liegen. Bekannte Vorrichtungen dieser Art arbeiten mit Klammern zum Befestigen der Vorlage oder mit Sauglöchern, durch welche die Vorlage angesaugt wird. Bei großflächigen Vorlagen, die auf einem ebenen Vorlagentisch aufgespannt sind, kommt es vor, daß sich die Vorlage wölbt und nicht plan auf dem Tisch anliegt, wodurch die Vorlage aus der Schärfeebene der Abtast- bzw. Aufzeichnungsoptik wandert. Hierdurch wird eine unscharfe Abtastung bzw. eine unscharfe Aufzeichnung hervorgerufen, was zu einem Qualitätsverlust der Reproduktion führt.

Auch bei Vorlagen unterschiedlicher Dicke oder bei Klebemontagen tritt dieser nachteilige Effekt in Erscheinung.

In der GB-PS 1,222,299 ist bereits eine Aufspannvorrichtung angegeben worden, bei der eine Vorlage mittels einer Gummimatte von unten gegen eine Glasplatte gedrückt wird. Die Gummimatte liegt auf einer ebenen Unterlage auf und ist an ihrem Rand luftdicht mit der Unterlage befestigt. Die Glasplatte liegt ebenfalls an ihrem Rand mit der Zwischenschaltung einer Dichtung auf der Gummimatte auf. Die Vorlagen werden auf die Gummimatte gelegt. Die Luft zwischen Gummimatte und Glasplatte wird mittels einer Saugöffnung, die im Randbereich der Gummimatte durch die Gummimatte und die Unterlage hindurchgeht, abgesaugt, wodurch sich die Gummimatte samt der Vorlage gegen die Glasplatte drückt. Zusätzlich wird die Gummimatte im zentralen Bereich durch eine durch die Unterlage hindurchgehende Öffnung mit Luft gegen die Glasplatte gedrückt.

Diese Anordnung garantiert in ihrem mittleren Bereich eine gute Halterung der Vorlagen, im Randbereich ist dies aber nicht gewährleistet, da die Gummimatte im Bereich Ihrer Anspannung nicht flexibel genug ist, um Vorlagen, die bis zum Rand reichen, ganzflächig anzudrücken. Es kann also somit am Rand der Vorlage ebenfalls ein Wölben der Vorlage auftreten. Außerdem ist die Absaugöffnung störend, so daß auch im Bereich der Absaugöffnung kein ganzflächiger Andruck der Vorlagen gegeben ist.

Da die Gummimatte am Rand, wo sie mit der Unterlage abdichtet, mit der Unterlage verschraubt ist, wird auch ein Auswechseln der Gummimatte erschwert. Durch die Abstützung der Glasplatte auf der Gummimatte mittels einer Dichtung, tritt ein vakuumabhängiges Absinken der Glasplatte auf, was zu einer Verschiebung der Fokusebene führt.

Der vorliegenden Erfindung liegt die Aufgabe zugrunde, eine verbesserte Aufspannvorrichtung zu schaffen, die diese Nachteile vermeidet, und durch die ein sicheres Aufspannen bis in den Randbereich der Glasplatte gegeben ist, ohne daß sich eine Verschiebung der Fokusebene der Vorlage innerhalb der Aufspannvorrichtung ergibt.

Diese Aufgabe wird durch die im kennzeichnenden Teil des Anspruchs 1 angegebenen Merkmale gelöst. Vorteilhafte Weiterbildungen sind in den Unteransprüchen 2 - 6 angegeben. Die Erfindung wird im folgenden anhand der Figuren 1 - 4 näher erläutert. Es zeigen

Figur 1 eine perspektivische Ansicht der Vorrichtung,

Figur 2 einen Querschnitt durch die Vorrichtung zur Planhaltung der Vorlagen,

Figur 3 einen Schnitt durch das Luftkissen mit Luftstutzen und

Figur 4 einen Querschnitt durch das Luftkissen und die Blechwanne mit einem Schnellverschluß für die Luftkissenöffnung.

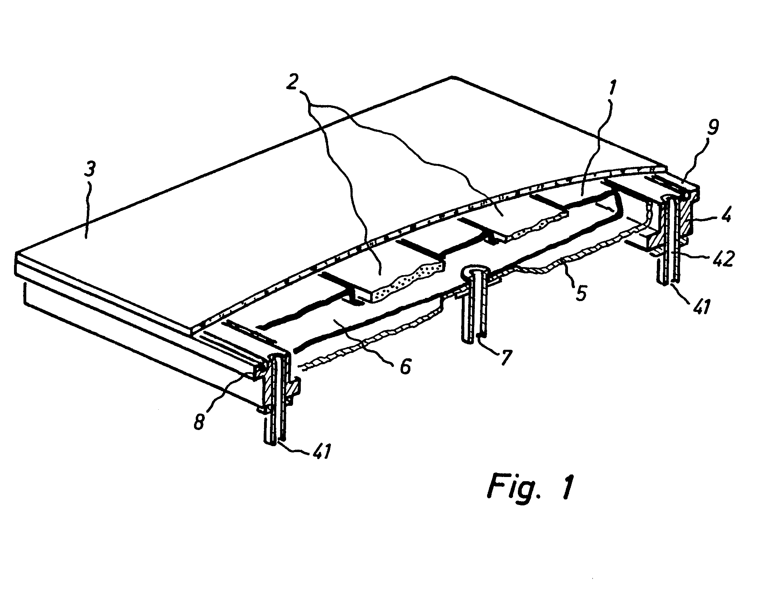

Figur 1 zeigt auf einer Schaumstoffmatte 1 liegende Vorlagen 2, die durch eine Glasplatte 3 abgedeckt sind. Die Glasplatte ist auf einem Rahmen 4 abgestützt. Die Unterseite der Platte stellt die Bildebene dar. Der Rahmen 4 umschließt eine Wanne 5 und weist eine umlaufende Dichtung 8 auf, auf der die Platte 3 aufliegt. Platte 3, Rahmen 4 und Wanne 5 bilden einen vakuumdichten Raum, der während des Betriebs der Vorrichtung evakuiert wird. Innerhalb der Wanne liegt ein Luftkissen 6, welches eine Öffnung 7 aufweist und die gesamte Wanne 5 ausfüllt. Der Rahmen 4 weist Vakuumöffnungen 41 auf, welche über Kanäle 42, die durch den Rahmen hindurchtreten, das Vakuum an die Glasplatte 3 und die Oberseite des Luftkissens weitergeben. Mit dem Entstehen des Vakuums wird gleichzeitig Luft in das Luftkissen 6 gesaugt, das über die Öffnung 7 mit dem Außendruck in Verbindung steht. Das Luftkissen 6 dehnt sich nach allen Seiten gleichmäßig aus und preßt so die Vorlagen 2 gegen die Unterseite der Glasplatte.

Gleichzeitig wird die Glasplatte durch das Vakuum gegen den Rahmen 4 gedrückt und somit in die Schärfeebene heruntergezogen. Es herrscht an der Glasplatte ein Druckausgleich, und es ist durch das Vakuum und das Luftkissen gewährleistet, daß die Vorlage innerhalb der Schärfeebene 9 liegt.

Da die Glasplatte 3 infolge ihres Eigengewichtes eine gewisse Durchbiegung hat, was nach ihrer Mitte hin eine Abweichung aus der Schärfeebene mit sich bringt, wird durch eine zusätzliche Maßnahme, nämlich durch einen geringen Überdruck an der Luftkissenöffnung 7 erreicht, daß die Verbiegung der Glasplatte, die durch das Eigengewicht der Glasplatte auftritt, aufgehoben wird, und die Unterkante der Platte überall exakt in der Fokusebene liegt.

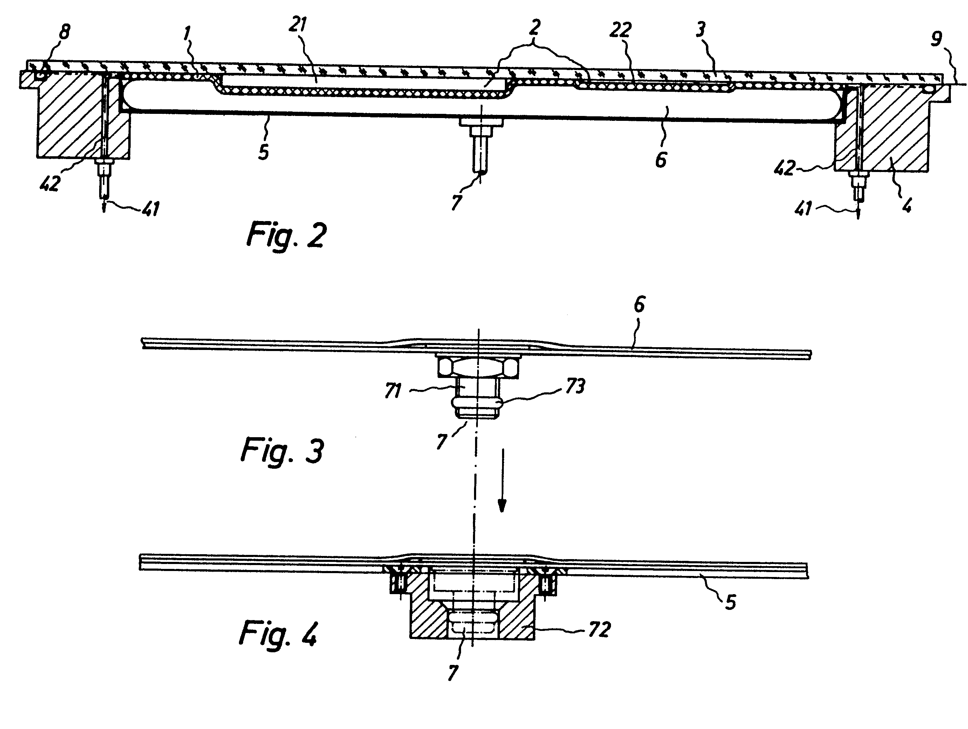

Figur 2 zeigt einen Querschnitt durch die in Figur 1 gezeigte Aufspannvorrichtung. Es sei darauf hingewiesen, daß mehrere Unterdruckkanäle 42 über den ganzen Rahmen verteilt vorgesehen werden können, so daß ein gleichmäßiger Unterdruck zwischen Glasplatte und Luftkissen entsteht. Aus Figur 2 ist zu ersehen, daß unterschiedlich dicke Vorlagen, z. B. die Vorlage 21 und die Vorlage 22, unabhängig von ihrer Dicke plan gegen die Glasplatte angedrückt werden. Das gleiche gilt auch für Klebemontagen oder überlappende Vorlagenteile.

Figur 3 zeigt das Luftkissen 6 im Schnitt mit seiner Lufteintrittsöffnung 7, die als angeschraubter Stutzen 71 ausgebildet ist, der nach Art eines Fahrradluftventils mit dem Luftkissen verschraubt ist. Die Figur 4 zeigt eine Aufnahme 72 für den Stutzen 71, die am Boden der Wanne 5 angeschraubt ist. Der Stutzen der Figur 3 greift, wie in Figur 4 gestrichelt gezeichnet ist, in diese Aufnahme ein und ist mit einem O-Ring 73 abgedichtet.

Die Vorteile der vorliegenden Erfindung liegen im wesentlichen darin, daß unebene oder in mehreren Schichten übereinandergeklebte Vorlagen plan gegen die Unterseite der Glasplatte gedrückt werden. Bei

0168529

Abtastvorlagen liegt somit die Vorlage immer im Fokusbereich der Abtastoptik, und bei der Aufzeichnung ist das Aufzeichnungsmaterial immer im Schärfebereich des aufzuzeichnenden Lichtstrahls.

Auch wird erreicht, daß unterschiedlich dicke Vorlagen in einem einzigen Abtastvorgang abgetastet werden können, wobei Unterschiede in der Vorlagendicke zwischen 0,1 und 5 mm leicht zu verarbeiten sind. Besonders günstig wirkt sich aus, daß die Vorlagen überall gleichmäßig, auch im Randbereich, sicher gegen die Glasplatte gedrückt werden, was einmal dadurch bewirkt wird, daß das Luftkissen auch dicht neben dem Rahmen die Vorlage nach oben drückt und daß es überall eine glatte Oberfläche hat, die im Berührungsbereich zur Glasplatte nicht durch Vakuumansaugstutzen, wie z. B. bei der GB-PS 1,222,299 gestört ist, weil die Vakuumkanäle in dem Rahmen angeordnet sind.

Die absolute Höhe des Vakuums ist für die Funktion der Erfindung nicht entscheidend, erforderlich ist jedoch, daß ein Mindestvakuum vorhanden ist, damit die Vorlagen in die Vorlagenebene gedrückt werden. Ein weiterer Vorteil besteht darin, daß auch bei sehr hohem Vakuum keine Bruchgefahr für die Glasplatte besteht, da zwischen Glasplatte und Luftsack ein Druckausgleich vorhanden ist. Auch kann durch Verringerung der Dicke der Glasplatte eine bessere Abtastqualität erreicht werden, weil durch den Druckausgleich und den Ausgleich der Durchbiegung der Glasplatte wesentlich dünnere Glasplatten verwendet werden können.

0168529

**Patentansprüche**

1. Aufspannvorrichtung für blattförmige Abtastvorlagen oder blattförmiges Aufzeichnungsmaterial mit einem eine durchsichtige Platte tragenden Unterteil, wobei zwischen Unterteil und Platte eine flexible Auflage für die Vorlagen vorgesehen ist, durch welche die Vorlagen gegen die Platte andrückbar sind, indem zwischen Auflage und Platte ein Unterdruck erzeugt und die flexible Auflage in ihrem zentralen Bereich durch einen Überdruck von unten gegen die Platte gedrückt wird, dadurch gekennzeichnet, daß
das Unterteil als Rahmen ausgebildet ist, auf dem sich die Platte dichtend abstützt,
das Innere des Rahmens als nach oben offene Wanne ausgebildet ist,
im Rahmen Vakuumkanäle vorgesehen sind, die mit dem durch die Wanne und die Platte gebildeten Innenraum in Verbindung stehen und daß als Auflage für die Vorlagen ein die Wanne ausfüllendes Luftkissen vorgesehen ist, das eine Lufteintrittsöffnung zum Aufblähen des Kissens aufweist.

2. Vorrichtung nach Anspruch 1, dadurch gekennzeichnet, daß die Vakuumkanäle durch den Rahmen geführt sind.

3. Vorrichtung nach einem der Ansprüche 1 - 3, dadurch gekennzeichnet, daß das Luftkissen mit einstellbarem Überdruck beaufschlagbar ist, um die Durchbiegung der Platte zu kompensieren.

4. Vorrichtung nach Anspruch 1, dadurch gekennzeichnet, daß sich zwischen Luftkissen und Vorlagen eine Schaumstoffmatte oder dergleichen befindet.

0168529

5. Vorrichtung nach Anspruch 1, <u>dadurch gekennzeichnet,</u> daß die Lufteintrittsöffnung des Luftkissens in Form einer mit der Wanne zusammenwirkenden Steckverbindung ausgebildet ist, die aus einem am Luftkissen angeordneten Stutzen und einer Aufnahme in der Wanne besteht, in die der Stutzen einsteckbar ist.

6. Vorrichtung nach Anspruch 5, <u>dadurch gekennzeichnet,</u> daß zur Dichtung der Steckverbindung ein den Stutzen umgebender O-Ring vorgesehen ist.

Fig. 1

Fig. 2

Fig. 3

Fig. 4

2/2

0168529